# EUROPEAN PATENT SPECIFICATION

(11) **EP 3 924 421 B1**
(45) Date of publication and mention of the grant of the patent: **04.06.2025**
(21) Application number: 20703766.4
(22) Date of filing: 12.02.2020
(51) Int. Cl.: C08L 23/08, C08L 23/06

(54) **SELF-SEALING POLYOLEFIN COMPOSITION**
SELBSTDICHTENDE POLYETHYLENZUSAMMENSETZUNG
COMPOSITION DE POLYÉTHYLÈNE AUTO-ÉTANCHE

(30) Priority: 14.02.2019 EP 19157259
(43) Date of publication of application: 22.12.2021
(73) Proprietor: ABU DHABI POLYMERS CO. LTD (BOROUGE) - Sole Proprietorship L.L.C., Abu Dhabi (AE); Borealis AG, 1020 Vienna (AT)
(72) Inventor: BURYAK, Andrey, Abu Dhabi (AE); HE, Zhang, Singapore 639798 (SG); JINGLEI, Yang, Singapore 639798 (SG); DUAN, Fei, Singapore 639798 (SG)
(74) Representative: Maiwald GmbH
(86) International application number: PCT/EP2020/053656
(87) International publication number: WO 2020/165286

(56) References cited:
- EP-A1- 2 938 374
- EP-A1- 2 938 374
- EP-A2- 1 335 960
- EP-A2- 1 335 960
- EP-A2- 2 118 182
- EP-A2- 2 118 182
- EP-A2- 3 259 765
- EP-A2- 3 259 765
- CN-A- 103 497 407
- CN-A- 103 497 407
- CN-A- 106 317 570
- CN-A- 106 317 570
- CN-A- 107 163 465
- KR-B1- 101 720 537
- KR-B1- 101 720 537
- US-A1- 2006 121 227
- US-A1- 2012 318 139
- US-A1- 2012 318 139

## Description

The present invention is directed to extruded articles comprising a polyolefin composition (C) comprising a polyolefin (PO) and a super absorbent polymer (SAP).

Due to easy processability, excellent chemical resistance, high durability, flexibility, and freedom from odor and toxicity, polyethylene is widely used all over the world in daily applications. It can be easily manufactured to thin films, hollow objects, fibers, etc. through known processes.

However, polyethylene products sometimes easily get injured during processing, storage, transportation, installation as well as servicing. After the injury, the polyethylene products might lose their original functions. Taking the protective polyethylene jackets for pipes and cables for an example, they insulate the projected objects from the surroundings, especially the water. When defects generate before or during its service life, it will lose its function towards protecting the pipes or cables, leading to their failure. Due to the widespread use, it is a time-consuming and labor-consuming work to first detect and then repair the damage. Accordingly, action can be taken only after the occurrence of property loss of the protected objects due to the damage of the protective polyethylene.

Automatic recovery of the properties of material upon damage can be achieved by introducing a self-healing function into the corresponding material. This can be also a prospective approach to repair the damage in the material to prolong the service life. Different self-healing mechanisms, including the molecular design, incorporation of healing agents carriers, and the fabrication of macro-vascular networks, have been explored to fulfill the self-healing function in different materials (Wu, D.Y., S. Meure, and D. Solomon, Self-healing polymeric materials: A review of recent developments. Prog. Polym. Sci., 2008. 33(5): p. 479-522). However, the self-healing process, regardless of the healing mechanisms, will inevitably introduce other chemicals into the polyethylene matrix, which is unfavorable for the polyethylene end-products considering the potential toxicity of the chemicals. For the protective polyethylene for the purpose of water resistance or isolating the protected objects from the humid surroundings, sealing of the defects automatically is another solution to re-establish this function.

Several self-sealing systems have been developed in polymer or polymer composites. In 2009, Beiermann et al. developed a layered polymeric structure with self-sealing function based on a dual microcapsule system (Beiermann, B.A., M.W. Keller, and N.R. Sottos, Self-healing flexible laminates for resealing of puncture damage. Smart Materials & Structures, 2009. 18(8)). The packaged silanol end-functionalized polydimethylsiloxane and a crosslinking agent in one type microcapsule can be catalyzed for polymerization when they get in contact with the tin catalyst in another type of microcapsule upon damage. Later this self-sealing system was further introduced into a fiber reinforced epoxy composites (Moll, J.L., et al., Self-sealing of mechanical damage in a fully cured structural composite. Composites Science and Technology, 2013. 79: p. 15-20). In both cases, good sealability was found at room temperature by this combination. In 2013, High sealing efficiency was achieved by Moll et al. (Moll, J.L., S.R. White, and N.R. Sottos, A Self-sealing Fiber-reinforced Composite. Journal of Composite Materials, 2010. 44(22): p. 2573-2585) in another self-sealing epoxy composite by the incorporation of microcapsules containing DCPD and pre-dispersing of Grubb's catalyst.

However, all the previously developed self-sealing polymeric systems are based on microcapsules, which are very weak due to the core-shell structure with liquid core inside. Considering the processing condition for thermoplastics with relatively high temperature, high pressure, and high shear stress, the survivability of the weak microcapsules through the thermal processing is a big challenge when they are applied to thermoplastics. Zhu et al. (Zhu, D.Y., et al., Thermo-molded self-healing thermoplastics containing multilayer microreactors. Journal of Materials Chemistry A, 2013. 1(24): p. 7191-7198; Zhu, D.Y., et al., Thermo-moldable self-healing commodity plastics with heat resisting and oxygen-insensitive healant capable of room temperature redox cationic polymerization. Journal of Materials Chemistry A, 2015. 3(5): p. 1858-1862; Zhu, D.Y., et al., Self-healing polyvinyl chloride (PVC) based on microencapsulated nucleophilic thiol-click chemistry. Polymer, 2015. 69: p. 1-9) have tried to incorporate the microencapsulated healing agents into thermoplastic matrix through different thermos-molding methods including melt mixing and hot compression, however, it is found that the survivability of the microcapsules in the hot melt with shear stress field is very poor. Even though some of the microcapsules can survive through the hot compression molding process, the toxicity of the incorporated healing agents to realize the self-healing function is also a big problem for the polyethylene end-products.

Taking the harsh processing condition for thermoplastics into account, there is a need in the art for a self-sealing polyolefin containing a sealing agent which is not toxic and survives holt melting conditions as well as exposure to shear stress.

Therefore, it is an object of the present invention to provide a polyolefin composition for extruded articles featured by self-sealing properties which does not show the above mentioned disadvantages of the prior art.

Accordingly, the present invention is in a first aspect directed to an extruded article consisting of a polyolefin composition (C), comprising
i) 85.0 to 99.0 wt.-% of a polyolefin (PO), and
ii) 1.0 to 15.0 wt.-% of a super absorbent polymer (SAP),

based on the overall weight of the polyolefin composition (C),
wherein the sum of the polyolefin (PO) and the super absorbent polymer (SAP) is from 95.0 to 100 wt% based on the overall weight of the polyolefin composition (C).

An extruded article as used herein is an article which has been obtained by extruding a polyolefin composition comprising, preferably consisting of, the polyolefin composition (C) as defined above.

Extruding a polyolefin composition as used herein refers to the well-known process of extrusion, i.e. forcing a polyolefin composition through a die, thereby applying heat and pressure on the polyolefin composition, i.e. a melt of a polyolefin composition is forced through a die. Such a process is typically performed in an extruder.

According to one embodiment of the present invention, the polyolefin (PO)
a) is a homopolymer of ethylene or of a C₃-C₈-α-olefin, or is a copolymer of at least two different monomers, wherein each of these different monomers is selected from the group consisting of ethylene and a C₃-C₈-α-olefin, and wherein the copolymer consists of monomer units which are derived from these monomers,
   and/or
b) is a homopolymer or a copolymer of ethylene or of a C₃-C₈-α-olefin, wherein the comonomer content is from 0 to 10 wt%, preferably from 0 to 5.0 wt%, more preferably from 0 to 3.0 wt%, still more preferably from 0 to 2.0 wt%, and yet more preferably from 0 to 1.0 wt%.

According to one embodiment of the present invention, the polyolefin (PO) has a density in the range of 820 to 980 kg/m³.

According to another embodiment of the present invention, the polyolefin (PO) is an ethylene homo- or copolymer (PE), in the following also referred to as polyethylene (PE).

According to one embodiment of the present invention, the polyethylene (PE) has a melt flow rate MFR₂ (190 °C, 2.16 kg) determined according to ISO 1133 in the range of 0.01 to 10.0 g/10 min.

According to another embodiment of the present invention, the polyethylene (PE) has a density in the range of 930 to 980 kg/m³.

According to a further embodiment of the present invention, the polyethylene (PE) is at least bimodal.

According to one embodiment of the present invention, the polyethylene (PE) comprises a first polyethylene (PE-1) and a second polyethylene (PE-2) having a lower melt flow rate MFR₂ (190 °C, 2.16 kg) determined according to ISO 1133 than the first polyethylene (PE-1).

According to another embodiment of the present invention, the first polyethylene (PE-1) is a polyethylene homopolymer and the second polyethylene (PE-2) is a copolymer of ethylene and a C₃-C₈ α-olefin.

It is especially preferred that the second polyethylene (PE-2) is a copolymer of ethylene and 1-butene.

According to a further embodiment of the present invention, the super absorbent polymer (SAP) is selected from the group consisting of polyacrylic acid, polyacrylates, polyacrylamide, polyvinylpyrrolidone, amylopectine, gelantine, cellulose, carboxymethyl starch, carboxymethyl cellulose, hydroxypropyl cellulose, polyvinyl alcohol, polyvinyl ether, polyvinyl pyridine, polyvinyl morpholinione, N,N-dimethylaminoethyl (meth)acrylate, N,N-dimethylaminopropyl (meth)acrylate or mixtures thereof.

Preferably, the super absorbent polymer (SAP) is sodium polyacrylate.

According to one embodiment of the present invention, the super absorbent polymer (SAP) has a particle size in the range of 38 to 300 µm like in the range of 38 to 180 µm and/or in the range of 180 to 300 µm.

According to one embodiment of the present invention, the polyolefin composition (C) consists of
i) 85.0 to 99.0 wt.-% of a polyolefin (PO),
ii) 1.0 to 15.0 wt.-% of a super absorbent polymer (SAP), and
iii) 0.0 to 5.0 wt.-% of additives (AD),
based on the overall weight of the polyolefin composition (C).

According to one embodiment of the present invention, the extruded article comprises at least 80.0 wt.-%, more preferably at least 90.0 wt.-%, still more preferably at least 95.0 wt.-%, like at least 99.0 wt.-%, of the polyolefin composition (C), based on the overall weight of the extruded article.

According to one especially preferred embodiment of the present invention, the extruded article consists of the polyolefin composition (C).

According to one embodiment of the present invention, the extruded article is a film or a pipe.

Preferably, the extruded article is a self-sealing film such as an agricultural or packaging film.

The self-sealing film comprising the inventive polyolefin composition (C) can also be a layer in a multilayer film.

Preferably, the extruded article is a self-sealing film which is penetrated by less than 0.3 g of water within 10 min after a pin hole of 0.88 mm has been generated at a film thickness of 2 mm and the film has been subsequently exposed to 50 g of water.

The present invention is in a second aspect directed to a coated article comprising a substrate and a coating, wherein the coating is coated onto at least a part of the surface of the substrate by extrusion, wherein the coating consists of an extruded article according to the first aspect of the present invention as described above including all embodiments thereof, taken alone or in combination.

The substrate can be any solid compound which can be coated with a polyolefin composition by extrusion.

According to one embodiment of the present invention, the substrate is a pipe or a cable.

The coating preferably has a thickness of at least 2 mm.

The present invention is in a third aspect directed to a pipe comprising a coating layer consisting of the extruded article according to the first aspect of the present invention as described above including all embodiments thereof, taken alone or in combination.

The present invention is in a fourth aspect directed to cable comprising a coating layer consisting of the extruded article according to the first aspect of the present invention as described above including all embodiments thereof, taken alone or in combination.

The present invention is in a fifth aspect also directed to the use of an extruded article as a coating for a pipe or a cable, wherein the extruded article is according to the first aspect of the present invention as described above including all embodiments thereof, taken alone or in combination.

A film as used herein can be any unoriented or oriented film like a cast film or a biaxially stretched (BOPP) film.

A pipe as used herein can be any pipe like a water pipe, i.e. cold water pipe, hot water pipe, or waste water pipe, or a gas pipe.

A pipe of the third aspect of the present invention comprising the extruded article according to the first aspect of the present invention can be made of any suitable material, like steel or polyolefin.

It is preferred that the pipe is made of a polyolefin material. In particular, it is preferred that the pipe is a polyethylene pipe or a polypropylene pipe.

A cable comprising the extruded article according to the first aspect of the present invention can be any cable like communication or power cable. A communication cable usually comprises a core and at least one coating layer. The core can be a metal or glass core. A low voltage power cable usually comprises a conductor core made of metal, like copper, and at least one insulation layer surrounding the conductor core. Medium and high voltage power cables usually comprise a conductor core surrounded by an inner semiconductive layer, an insulation layer and an outer semiconductive layer, in that order.

In the following, the present invention is described in more detail.

### The polyolefin composition (C)

The polyolefin composition (C) according to the present invention comprises a polyolefin (PO) and a super absorbent polymer (SAP). In particular, the polyolefin composition (C) comprises 85.0 to 99.0 wt.-% of the polyolefin (PO) and 1.0 to 15.0 wt.-% of the super absorbent polymer (SAP), based on the overall weight of the polyolefin composition (C), wherein the sum of the polyolefin (PO) and the super absorbent polymer (SAP) is from 95.0 to 100 wt% based on the overall weight of the polyolefin composition (C).

Preferably, the polyolefin composition (C) comprises 87.0 to 98.0 wt.-%, more preferably 90.0 to 95.0 wt.-% of the polyolefin (PO) and 2.0 to 13.0 wt.-%, more preferably 5.0 to 10.0 wt.-% of the super absorbent polymer (SAP), based on the overall weight of the polyolefin composition (C).

Further, the polyolefin composition may comprise additives (AD).

Accordingly, it is preferred that the polyolefin composition (C) comprises, more preferably consists of, 85.0 to 99.0 wt.-%, more preferably 87.0 to 98.0 wt.-%, still more preferably 90.0 to 95.0 wt.-% of the polyolefin (PO), 1.0 to 15.0 wt.-%, more preferably 2.0 to 13.0 wt.-%, still more preferably 5.0 to 10.0 wt.-% of the super absorbent polymer (SAP) and optionally 0.0 to 5.0 wt.-%, more preferably 0.001 to 3.0 wt.-%, still more preferably 0.1 to 2.5 wt.-% of additives (AD), based on the overall weight of the polyolefin composition (C). The additives are described in more detail below.

The polyolefin composition (C) is preferably obtained by melt-blending the polyolefin (PO) with the super absorbent polymer (SAP). In particular, it is preferred that the polyolefin (PO) is mixed with the superabsorbent polymer (SAP) in amounts as indicated above. The thus obtained mixture is subsequently subjected to thermal extrusion or hot pressing. For thermal extrusion, the mixture is fed into an extruder and processed therein at a temperature of 150 to 200 °C, more preferably 160 to 190 °C, still more preferably 170 to 180°C, thereby obtaining the polyolefin composition (C). For the hot pressing process, the mixture is fed into the inner chamber of a hot press and heated to a temperature of 150 to 200 °C, more preferably 160 to 190 °C, still more preferably 170 to 180 °C. Subsequently, the pressure is gradually increased to 4 to 10 tons, more preferably 5 to 8 tons, still more preferably 6 to 7 tons and is kept for about 10 minutes. The thus obtained polyolefin composition (C) is cooled to room temperature.

### The polyolefin (PO)

As outlined above, the major component of the inventive polyolefin composition (C) is the polyolefin (PO).

As used herein, the term 'polyolefin' is related to a homopolymer or a copolymer of olefins, such as ethylene, propylene, 1-butene, 3-methyl-1-butene, 1-pentene, 4-methyl-1-pentene, 3,3-dimethyl-1-butene, 1-octene, 1-decene, and the like, or a mixture of the polymers or the copolymers of such olefins.

As indicated already above, the polyolefin (PO) is according to one embodiment a homopolymer of ethylene or of a C₃-C₈-α-olefin. Suitable α-olefins are propylene, 1-butene, 3-methyl-1-butene, 1-pentene, 4-methyl-1-pentene, 3,3-dimethyl-1-butene, 1-hexene, and 1-octene.

The polyolefin (PO) is preferably a homopolymer of ethylene or of propylene. It is especially preferred that the polyolefin (PO) is a a homopolymer of ethylene.

As indicated already above, the polyolefin (PO) is according to one embodiment a copolymer of at least two different monomers, wherein each of these different monomers is selected from the group consisting of ethylene and a C₃-C₈-α-olefin, and wherein the copolymer consists of monomer units which are derived from these monomers. Suitable α-olefins are propylene, 1-butene, 3-methyl-1-butene, 1-pentene, 4-methyl-1-pentene, 3,3-dimethyl-1-butene, 1-hexene, and 1-octene.

The copolymer comprises at least two different monomers, i.e. two, three or more different monomers. The amount of different monomers will be usually not higher than four. It is preferred that the amount of different monomers is three (often referred to as terpolymer) or two.

The polyolefin (PO) is preferably a copolymer of ethylene or propylene, more preferably a copolymer of ethylene.

Suitable comonomers of a copolymer of propylene are ethylene, and C₄-C₈-α-olefins. A preferred comonomer is ethylene. It is further preferred that ethylene is the only comonomer resulting in a propylene-ethylene copolymer.

Suitable comonomers of a copolymer of ethylene are C₄-C₈-α-olefins. Preferred comonomers are 1-butene, 1-hexene and 1-octene. 1-butene is particularly preferred.

As indicated already above, the polyolefin (PO) is according to one embodiment a copolymer of ethylene or of a C₃-C₈-α-olefin, wherein the comonomer content is from 0 to 10 wt%, preferably from 0 to 5.0 wt%, more preferably from 0 to 3.0 wt%, still more preferably from 0 to 2.0 wt%, and yet more preferably from 0 to 1.0 wt%.

The polyolefin (PO) is preferably a copolymer of ethylene or propylene, more preferably a copolymer of ethylene.

The copolymer can comprise one or more comonomers, i.e. one, two or more different comonomers. The amount of different comonomers will be usually not higher than three. It is preferred that the amount of different comonomers is two (often referred to as terpolymer) or one.

Suitable comonomers of a copolymer of propylene are ethylene, and C₄-C₈-α-olefins. A preferred comonomer is ethylene. It is further preferred that ethylene is the only comonomer resulting in a propylene-ethylene copolymer.

Suitable comonomers of a copolymer of ethylene are C₄-C₈-α-olefins. Preferred comonomers are 1-butene, 1-hexene and 1-octene. 1-butene is particularly preferred.

Suitable comonomers of a copolymer of ethylene or propylene are also polar comonomers like vinyl acetate, (meth)acrylic acid and (meth)acrylate esters of methanol, ethanol and 1-butanol.

It is preferred that the polyolefin (PO) has a density in the range of 820 to 980 kg/m³, more preferably in the range of 840 to 970 kg/m³, still more preferably in the range of 850 to 960 kg/m³, like in the range of 860 to 955 kg/m³.

Preferably, the polyolefin (PO) is mechanically stable. Accordingly, the polyolefin (PO) preferably has a tensile modulus determined according to ISO 527 of at least 600 MPa, more preferably in the range of 600 to 1200 MPa, still more preferably in the range of 700 to 1100 MPa, like in the range of 800 to 1000 MPa.

Additionally or alternatively to the previous paragraph, it is preferred that the polyolefin (PO) has a Charpy notched impact strength determined according to ISO 179 / leA at 23 °C in the range of 4.0 to 20.0 kJ/m², more preferably in the range of 6.0 to 18.0 kJ/m², still more preferably in the range of 8.0 to 15.0 kJ/m², like in the range of 10.0 to 13.0 kJ/m².

The polyolefin (PO) is preferably a polypropylene (PP) or a polyethylene (PE). It is especially preferred that the polyolefin (PO) is a polyethylene (PE).

The polyethylene (PE) can be an ethylene homopolymer or an ethylene copolymer, the latter being preferred.

An 'ethylene homopolymer' denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

A polymer is denoted 'ethylene copolymer' if the polymer is derived from ethylene monomer units and at least one (alpha-olefin) comonomer. The alpha-olefin comonomer preferably is selected from alpha-olefin comonomers with 3 to 8 carbon atoms, more preferably 4 to 8 carbon atoms. Suitable alpha-olefin comonomer species are 1-butene, 1-hexene, 4-methyl-1-pentene, 1-octene or their mixtures. Preferred are 1-butene and 1-hexene. Most preferred is 1-butene.

It is preferred that the polyethylene (PE) has a density in the range of 930 to 980 kg/m³, more preferably in the range of 940 to 970 kg/m³, still more preferably in the range of 945 to 960 kg/m³, like in the range of 950 to 955 kg/m³.

Further, it is preferred that the polyethylene (PE) has a rather low melt flow rate MFR₂. Accordingly, it is preferred that the polyethylene (PE) has a melt flow rate MFR₂ (190 °C, 2.16 kg) equal or below 10.0 g/10 min, more preferably in the range of 0.5 to 6.0 g/10 min, still more preferably in the range of 0.8 to 3.0 g/10 min, like in the range of 1.0 to 2.0 g/10 min.

Preferably, the polyethylene (PE) according to the present invention has a melt flow rate MFR₃ (190 °C, 5.0 kg) determined according to ISO 1133 in the range of 1.0 to 20.0 g/10 min, more preferably in the range of 2.0 to 15.0 g/10 min, still more preferably in the range of 3.0 to 10.0 g/10 min, like in the range of 4.0 to 6.5 g/10 min.

Additionally or alternatively to the previous paragraph, it is preferred that the polyethylene (PE) has a melt flow rate MFR₂₁ (190 °C, 21.6 kg) determined according to ISO 1133 in the range of 50.0 to 120.0 g/10 min, more preferably in the range of 70.0 to 110.0 g/10 min, still more preferably in the range of 80.0 to 100.0 g/10 min, like in the range of 85.0 to 95.0 g/10 min.

Accordingly, it is preferred that the polyethylene (PE) has a flow rate ratio FRR_{21/5}, being the ratio of MFR₂₁ to MFR₅ in the range of 20.0 to 80.0, more preferably in the range of 40.0 to 70.0, still more preferably in the range of 50.0 to 68.0, like in the range of 55.0 to 65.0.

Further, it is preferred that the polyethylene (PE) is mechanically stable. Accordingly, the polyethylene (PE) preferably has a tensile modulus determined according to ISO 527 of at least 600 MPa, more preferably in the range of 600 to 1200 MPa, still more preferably in the range of 700 to 1100 MPa, like in the range of 800 to 1000 MPa.

Additionally or alternatively to the previous paragraph, it is preferred that the polyethylene (PE) has a Charpy notched impact strength determined according to ISO 179 / 1eA at 23 °C in the range of 4.0 to 20.0 kJ/m², more preferably in the range of 6.0 to 18.0 kJ/m², still more preferably in the range of 8.0 to 15.0 kJ/m², like in the range of 10.0 to 13.0 kJ/m².

Preferably, the polyethylene (PE) is at least bimodal. Accordingly, it is preferred that the polyethylene (PE) comprises at least two polyethylene fractions.

The polyolefin (PO), preferably the polyethylene (PE), is preferably prepared in a multistage process in the presence of a Ziegler-Natta catalyst.

In particular, the polyolefin (PO), preferably the polyethylene (PE), is preferably produced by polymerizing respectively copolymerizing a monomer, preferably ethylene, in a reactor cascade formed by at least a first reactor (R1) and at least a second reactor (R2), whereby preferably the first reactor (R1) is a slurry reactor (SR) and the second reactor (R2) is a gas phase reactor (GPR).

In the following the multistage process is described.

The first polymerization stage takes place in the first reactor (R1). The first reactor (R1) is preferably a first slurry phase reactor (SR) and more preferably a first loop reactor (LR). Such reactors include a continuous stirred tank reactor and a loop reactor. It is especially preferred to conduct the polymerization in a loop reactor. In such reactors the slurry is circulated with a high velocity along a closed pipe by using a circulation pump. Loop reactors are generally known in the art and examples are given, for instance, in US-A-4,582,816, US-A-3,405,109, US-A-3,324,093, EP-A-479 186 and US-A-5,391,654.

The temperature in the first reactor (R1) is typically from 50 to 115 °C, preferably from 60 to 110 °C and in particular from 70 to 100 °C. The pressure is typically from 1 to 150 bar, preferably from 1 to 100 bar.

It is sometimes advantageous to conduct the first loop polymerization above the critical temperature and pressure of the fluid mixture. Such operations are described in US-A-5,391,654. In such an operation, the temperature is typically at least 85 °C, preferably at least 90 °C. Furthermore the temperature is typically not higher than 110°C, preferably not higher than 105°C. The pressure under these conditions is typically at least 40 bar, preferably at least 50 bar. Furthermore, the pressure is typically not higher than 150 bar, preferably not higher than 100 bar. In a preferred embodiment, the first and/or second polymerization stage, is carried out under supercritical conditions whereby the reaction temperature and reaction pressure are above equivalent critical points of the mixture formed by hydrocarbon medium, monomer, hydrogen and optional comonomer and the polymerization temperature is lower than the melting temperature of the polymer formed.

In the first reactor (R1) a first intermediate material comprising, preferably consisting of the first polyolefin, optionally together with a pre-polymer fraction, is obtained. The first intermediate material is obtained by polymerizing a monomer, preferably ethylene, in the first reactor (R1), optionally in the presence of the pre-polymer fraction, thereby obtaining the first polyolefin.

For adjusting the MFR₂ of the first intermediate material preferably hydrogen is introduced into the first reactor (R1). The first intermediate material comprising preferably consisting of the first polyolefin, optionally together with a pre-polymer fraction, obtained in the first reactor (R1) is subsequently transferred to the second reactor (R2).

The slurry may be withdrawn from the first reactor (R1) either continuously or intermittently. The slurry withdrawn from the first polymerization comprises the first intermediate material.

The first intermediate material comprising, preferably consisting of the first polyolefin, optionally together with a pre-polymer fraction, obtained in the first reactor (R1) is transferred for a purging step into a flash vessel and then to a second reactor (R2). In the flash vessel the hydrocarbons were substantially removed from the polymer. Optionally, but less preferred, the first intermediate is directly transferred to the second reactor (R2).

The second polymerization stage takes place in the second reactor (R2). The second reactor (R2) is gas phase reactor (GPR), more preferably a fluidized bed gas phase reactor.

In a fluidized bed gas phase reactor, an olefin is polymerized in the presence of a polymerization catalyst in an upwards moving gas stream. The reactor typically contains a fluidized bed comprising the growing polymer particles containing the active catalyst located above a fluidization grid. The polymer bed is fluidized with the help of a fluidization gas comprising the olefin monomer, eventually comonomer(s), eventually chain growth controllers or chain transfer agents, such as hydrogen, and eventually inert gas. The inert gas can thereby be the same or different as the inert gas used in the slurry phase reactor. The fluidization gas is introduced into an inlet chamber at the bottom of the reactor. To make sure that the gas flow is uniformly distributed over the cross-sectional surface area of the inlet chamber, the inlet pipe may be equipped with a flow dividing element as known in the art, e. g. US-A-4,933,149 and EP-A-684 871.

Optionally the process may further comprise a pre-polymerization stage which precedes the first polymerization stage. The purpose of the pre-polymerization stage is to polymerize a small amount of polymer onto the catalyst at a low temperature and/or a low monomer concentration. By pre-polymerization it is possible to improve the performance of the catalyst in slurry and/or modify the properties of the final polymer.

The pre-polymerization is conducted in a pre-polymerization reactor. The pre-polymerization reactor is preferably a pre-polymerization slurry phase reactor or pre-polymerization gas phase reactor. More preferably the pre-polymerization reactor is a pre-polymerization slurry phase reactor and most preferably a pre-polymerization loop reactor.

The pre-polymerization is preferably conducted in an inert diluent, typically a hydrocarbon diluent such as methane, ethane, propane, n-butane, isobutene, pentanes, hexanes, heptanes, octanes etc., or their mixtures. Preferably the diluent is a low boiling hydrocarbon having from 1 to 4 carbon atoms or a mixture of such hydrocarbons. The most preferred diluent is propane.

The temperature in the pre-polymerisation stage is typically from 0 °C to 90 °C., preferably from 20 °C to 80 °C, more preferably from 40 °C to 70 °C. The pressure is not critical and is typically from 1 bar to 150 bar, preferably from 10 bar to 100 bar.

The amount of monomer is typically such that from 0.1 grams to 1000 grams of monomer per one gram solid catalyst component is polymerised in the pre-polymerisation stage. As the person skilled in the art knows, the catalyst particles recovered from a continuous pre-polymerisation reactor do not all contain the same amount of pre-polymer. Instead, each particle has its own characteristic amount which depends on the residence time of that particle in the pre-polymerisation reactor. As some particles remain in the reactor for a relatively long time and some for a relatively short time, then also the amount of pre-polymer on different particles is different and some individual particles may contain an amount of pre-polymer which is outside the above limits. However, the average amount of pre-polymer on the catalyst typically is within the limits specified above.

The catalyst system is preferably fed to the first polymerization reactor.

In case a pre-polymerization stage is in use the catalyst components are preferably all introduced to the pre-polymerization stage.

Optionally, additives and/or other polymer components can be added to the polyolefin (PO) during a compounding step to produce the polyolefin composition of the present invention. Additives typically used with polyolefins are for instance pigments, carbon black, stabilizers (e.g. antioxidant agents), antiacids and/or anti-UV's, antistatic agents and utilization agents (such as processing aid agents). The additives are described in more detail below.

The additives can be added separately to the compounding step. However, it is preferred to pre-compound them into one or more master batches and add the one or more master batches to the polyolefin (PO) during the compounding step.

It is preferred that the addition of further polymer components is limited to an amount of less than 3 wt.-%, preferably less than 2 wt.-% with respect to the total polyolefin composition according to the present invention.

Preferably, the polyolefin (PO) of the invention obtained from the gas phase reactor is compounded in an extruder together with additives and/or other polymer in a manner known in the art. The extruder may be e.g. any conventionally used extruder. As an example of an extruder for the present compounding step may be those supplied by Japan Steel works, Kobe Steel or Farrel-Pomini, e.g. JSW 460P or JSW CIM90P.

According to the invention the polyolefin (PO) of the polyolefin composition (C) is obtained by a multistage polymerization process, as described above, in the presence of a catalyst system comprising a Ziegler-Natta catalyst (ZN).

### The super absorbent polymer (SAP)

A further component of the inventive polyethylene composition is a super absorbent polymer (SAP).

Super absorbent polymers (SAP) are known in the art and include polysaccharides such as carboxymethyl starch, carboxymethyl cellulose, and hydroxypropyl cellulose; nonionic types such as polyvinyl alcohol, and polyvinyl ethers; cationic types such as polyvinyl pyridine, polyvinyl morpholinione, and N,N-dimethylaminoethyl or N,N-diethylaminopropyl acrylates and methacrylates, and the respective quaternary salts thereof.

Typically, super absorbent polymers (SAP) useful in the present invention have a plurality of anionic, functional groups, such as sulfonic acid, and more typically carboxy, groups. Examples of polymers suitable for use herein include those which are prepared from polymerizable, unsaturated, acid-containing monomers. Such monomers include the olefinically unsaturated acids and anhydrides that contain at least one carbon to carbon olefinic double bond. More specifically, these monomers can be selected from olefinically unsaturated carboxylic acids and acid anhydrides, olefinically unsaturated sulfonic acids and mixtures thereof.

Some non-acid monomers can also be included, preferably in minor amounts, in preparing the super absorbent polymer (SAP) herein. Such non-acid monomers can include, for example, the water-soluble or water-dispersible esters of the acid-containing monomers, as well as monomers that contain no carboxylic or sulfonic acid groups at all. Optional non-acid monomers can thus include monomers containing the following types of functional groups: carboxylic acid or sulfonic acid esters, hydroxyl groups, amide-groups, amino groups, nitrile groups, quaternary ammonium salt groups and aryl groups.

Olefinically unsaturated carboxylic acid and carboxylic acid anhydride monomers include the acrylic acids typified by acrylic acid itself, methacrylic acid, ethacrylic acid, - chloroacrylic acid, -cyanoacrylic acid, -methylacrylic acid (crotonic acid), -phenylacrylic acid, -acrytoxypropionic acid, sorbic acid, -chlorosorbic acid, angelic acid, cinnamic acid, p-chlorocinnamic acid, -stearylacrylic acid, itaconic acid, citraconic acid, mesaconic acid, glutaconic acid, aconitic acid, maleic acid, fumaric acid, tricarboxyethylene and maleic acid anhydride.

Olefinically unsaturated sulfonic acid monomers include aliphatic or aromatic vinyl sulfonic acids such as vinylsulfonic acid, allyl sulfonic acid, vinyl toluene sulfonic acid and styrene sulfonic acid; acrylic and methacrylic sulfonic acid such as sulfoethyl acrylate, sulfoethyl methacrylate, sulfopropyl acrylate, sulfopropyl methacrylate, 2-hydroxy-3-methacryloxypropyl sulfonic acid and 2-acrylamide-2-methylpropane sulfonic acid.

It is preferred that the super absorbent polymers (SAP) for use in the present invention contain carboxy groups. In particular, it is preferred that the super absorbent polymer (SAP) is polyacrylic acid and/or a salt thereof. More preferably, the super absorbent polymer (SAP) is fully or partially neutralized polyacrylic acid. It is especially preferred that the super absorbent polymer (SAP) is the sodium polyacrylate.

Polymer materials used in making the super absorbent polymers (SAP) are slightly network crosslinked polymers of partially neutralized polyacrylic acids and starch derivatives thereof. More preferably still, the super absorbent polymers (SAP) comprise from about 50% to about 95%, more preferably about 75%, neutralized, slightly network crosslinked, polyacrylic acid (i.e., poly (sodium acrylate/acrylic acid)). Network crosslinking renders the polymer substantially water-insoluble and, in part, determines the absorptive capacity and extractable polymer content characteristics of the super absorbent polymers (SAP).

The super absorbent polymers (SAP) used in the present invention can have a size, shape and/or morphology varying over a wide range. The absorbent gelling particles may have a large ratio of greatest dimension to smallest dimension (e.g., granules, flakes, pulverulents, interparticle aggregates, interparticle crosslinked aggregates, and the like) and can be in the form of fibers, foams and the like.

For particles of super absorbent polymers (SAP) employed in the present invention, the particle size is in the range of 38 to 180 µm according to one embodiment of the present invention. According to another embodiment of the present invention, the particle size of the super absorbent polymers is in the range of 180 to 300 µm. Particle size is preferably defined as the dimension determined by sieve size analysis.

It is especially preferred that the super absorbent polymers (SAP) have a particle size in the range of 38 to 180 µm. In particular, it is preferred that the polyolefin composition (C) comprises 10.0 wt.-% of a super absorbent polymer (SAP) having a particle size in the range of 38 to 180 µm.

### The additives (AD)

The polyolefin composition (C) according to the present invention may contain additives (AD)
Typical additives are acid scavengers, antioxidants, colorants, light stabilisers, plasticizers, slip agents, anti-scratch agents, dispersing agents, processing aids, lubricants, pigments, fillers and the like.

Such additives are commercially available and for example described in "Plastic Additives Handbook", 6th edition 2009 of Hans Zweifel (pages 1141 to 1190).

Furthermore, the term "additives (AD)" according to the present invention also includes carrier materials, in particular polymeric carrier materials.

### The Polymeric Carrier Material

Preferably the polyolefin composition (C) of the invention does not comprise (a) further polymer(s) different to the polyolefin (PO) and the super absorbent polymer (SAP) in an amount exceeding 15 wt.-%, preferably in an amount exceeding 10 wt.-%, more preferably in an amount exceeding 9 wt.-%, based on the weight of the polyolefin composition (C). If an additional polymer is present, such a polymer is typically a polymeric carrier material for the additives (AD). Any carrier material for additives (AD) is not calculated to the amount of polymeric compounds as indicated in the present invention, but to the amount of the respective additive.

The polymeric carrier material of the additives (AD) is a carrier polymer to ensure a uniform distribution in the polyolefin composition (C) of the invention. The polymeric carrier material is not limited to a particular polymer. The polymeric carrier material may be ethylene homopolymer, ethylene copolymer obtained from ethylene and α-olefin comonomer such as C₃ to C₈ α-olefin comonomer, propylene homopolymer and/or propylene copolymer obtained from propylene and α-olefin comonomer such as ethylene and/or C₄ to C₈ α-olefin comonomer.

The present invention will now be described in further detail by the examples provided below.

### EXAMPLES

### 1. Measuring methods

The following definitions of terms and determination methods apply for the above general description of the invention as well as to the below examples unless otherwise defined. **MFR₂ (190 °C)** is measured according to ISO 1133 (190 °C, 2.16 kg load).

**MFR₅ (190 °C)** is measured according to ISO 1133 (190 °C, 5.0 kg load).

**MFR₂₁ (190 °C)** is measured according to ISO 1133 (190 °C, 21.6 kg load).

**Density** of the polymer was measured according to IS0 1183-1:2004 Method A on compression moulded specimen prepared according to EN IS0 1872-2 (Feb 2007) and is given in kg/m³.

**Ash content** is measured according to ISO 3451-1 (1997) standard.

**Charpy notched impact strength** is determined according to ISO 179 / 1eA at 23 °C and at 0 °C by using injection moulded test specimens as described in EN ISO 1873-2 (80 x 10 x 4 mm).

**Tensile Modulus** is measured according to ISO 527-2 (cross head speed = 50 mm/min; 23 °C) using injection molded specimens as described in EN ISO 1873-2 (dog bone shape, 4 mm thickness).

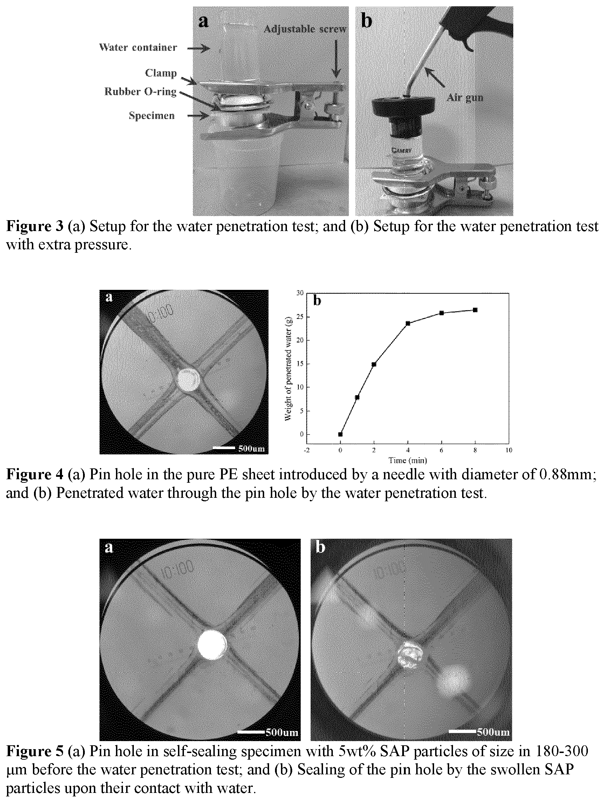

**Water penetration test** of the self-sealing polyethylene was carried out as follows: Firstly, a pin hole was manually introduced into the pure PP or PE specimen (50 mm x 50 mm x 2 mm) by penetrating through the center of the specimen using a needle with diameter of 0.88mm. The treated specimen was mounted onto the setup for the water penetration test, as shown in Figure 3a. After that, about 50.0 g DI water was poured into the water container, and the penetrated water through the pin hole was measured at the 1st, 2nd, 4th, 6th, 8th, and 10th min.

### 2. Examples

The following examples illustrate the fabrication of the self-sealing PE specimens and the water penetration tests in accordance with the present invention. The scope of the present invention is not construed as merely consisting of the following examples.

### Used materials

| | |
|---|---|
| **PE** | is the commercial copolymer of ethylene and 1-butent MB6561 of Borouge having a melt flow rate MFR₂ (190 °C, 2.16 kg) determined according to ISO 1133 of 1.5 g/10 min and a density of 954 kg/m³. |
| **SAP** | is a commercial super absorbent polymer available from Sigma-Aldrich being a cross-linked sodium poly(acrylate). |

### Example 1: Mixing of SAP particles into PE matrix by thermal extrusion

In this example, 0.5g SAP particles in size range of 38-180µm was mixed uniformly with 4.5g PE powder, and dried at 60°C for about 12h under vacuum to remove the absorbed moisture. The mixture was fed into a mini-extruder with two counter-rotating screws (Haake Minilab II), and was processed using the extruder at 180°C for 10min under rotating speed of 60 round/min for the screws. And finally it was extruded out as the final products.

### Example 2: Mixing of SAP particles into PE matrix by hot pressing

In this example, 2.5g SAP particles with size in 38-180µm was firstly mixed with 22.5g PE powder, MB6561, and then dried at 60°C for about 12h under vacuum to remove the absorbed moisture. The mixture was added into a mould with size of 100* 100*2mm³ for the inner chamber in a hot press (CARVER) which was pre-heated to 180°C. After being fully melted for about 20min, the pressure was gradually increased to about 6 tons and was further kept at that condition for about 10min. And finally, the heating was switched off and the specimen was cooled down to room temperature under the same pressure.

### Example 3: Water penetration test of the pure PE specimen

Firstly, a pin hole was manually introduced into the pure PE specimen by penetrating through the center of the specimen using a needle with diameter of 0.88mm. The treated specimen was mounted onto the setup for the water penetration test, as shown in Figure 3a. After that, about 50.0g DI water was poured into the water container, and the penetrated water through the pin hole was measured at the 1^{st}, 2^{nd}, 4^{th}, 6^{th}, 8^{th}, and 10^{th} min.

### Example 4: Water penetration test of the self-sealing PE specimen containing 5wt% small SAP particles

In this example, after the same process as Example 3 except that the pure PE specimen was replaced by self-sealing PE specimen containing 5wt% SAP particles in size of 38-180µm, the self-sealing specimen was dried at 60°C for about 12h under vacuum to remove the absorbed water by the SAP in the pin hole. The dried specimen was subjected to the water penetration test again and the penetrated water was monitored. Up to 6 cycles was conducted for the same self-sealing to test the repeatability.

### Example 5: Water penetration test of the self-sealing PE specimen containing 5wt% big SAP particles

In this example, the process is the same as Example 4 except that the specimen was replaced by self-sealing PE specimen containing 5wt% SAP particles in size of 180-300µm.

### Example 6: Water penetration test of the self-sealing PE specimen containing 10wt% small SAP particles

In this example, the process is the same as Example 4 except that the specimen was replaced by self-sealing PE specimen containing 10wt% SAP particles in size of 38-180µm.

### Example 7: Water penetration test of the self-sealing PE specimen containing 10wt% big SAP particles

In this example, the process is the same as Example 4 except that the specimen was replaced by self-sealing PE specimen containing 10wt% SAP particles in size of 180-300µm.

### Example 8: Water penetration test of the self-sealing PE specimen containing 10wt% big SAP particles with the defect in form of crack

In this embodiment, defect in the form of crack with different length and width was introduced to the self-sealing PE specimens by manually cutting the specimens using a sharp blade. The testing protocol is the same as Example 4.

### Example 9: Water penetration test of the self-sealing PE specimen containing 10wt% small SAP particles under extra pressure

In this embodiment, the process is the same as Example 6 except that extra pressure was applied using the setup as shown in Figure 3b. Extra pressure of about 3 psi was used for the test.

### Example 10: Water penetration test of the self-sealing PE specimen containing 10wt% big SAP particles under extra pressure

In this embodiment, the process is the same as Example 7 except that extra pressure was applied using the setup as shown in Figure 3b. Extra pressure of about 3-6 psi was used for the test.

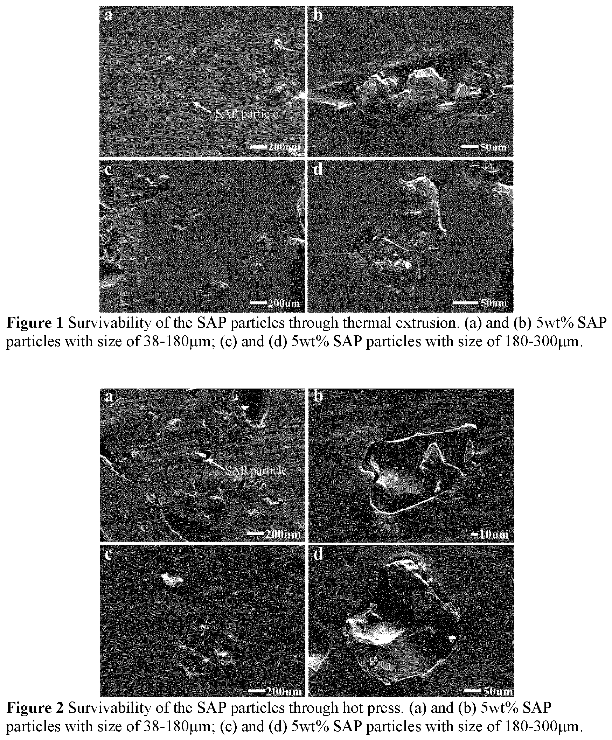

**Figure 1** demonstrates the survivability of the SAP particles through the thermal extrusion process using a mini-extruder with two counter-rotating screws (Haake Minilab II). The adopted size ranges of the SAP particles are 38-180µm (small) and 180-300µm (big), respectively. The SAP particles were firstly mixed uniformly with PE powder, and then processed using the extruder at 180°C for 10min under rotating speed of 60 round/min for the screws. It can be seen that the SAP particles, regardless of size, can survive through the thermal extrusion process. After the process, they can be uniformly dispersed in the PE matrix.

**Figure 2** demonstrates the survivability of the SAP particles through the hot pressing process. The SAP particles, same as above, were firstly mixed uniformly with PE powder, and then pressed using a hot press at 180°C for 10min under constant pressure of 6 tons. It is observed that the SAP particles, regardless of size, can survive through the hot pressing process. After the process, they can be uniformly dispersed in the PE matrix.

**Figure 3**a shows the setup for the water penetration test, which includes a water container, a clamp with an adjustable screw, a rubber O-ring, and the sample. For each test, about 50.0g deionized (DI) water is charged into the container. **Figure 3b** shows the setup for the water penetration test with extra pressure.

**Figure 4**a shows the generated pin hole by penetrating through the specimen using a needle with diameter of 0.88mm. **Figure 4b** shows the penetrated water through the pin hole with respect to time using the setup as shown in **Figure 3**a. It is observed that about 26.5g water in total can penetrate through the pin hole during the test.

**Figure 5**a and b respectively show the self-sealing PE specimen with 5wt% big SAP particles before and after the water penetration test. Before the test, the pin hole is similar to the pure PE specimen without anything in the hole. However, after the test, it is evident that the pin hole is completely blocked by the swollen SAP particles.

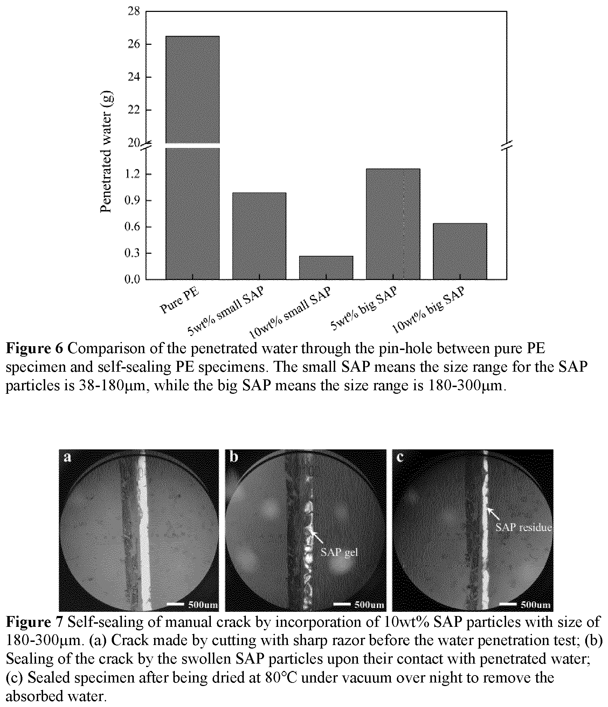

**Figure 6** shows the comparison of the penetrated water through the pin hole in pure PE specimen and self-sealing PE specimens respectively containing 5wt% small and big SAP particles and 10wt% small and big SAP particles. Much less water can penetrate through the pin hole for the self-sealing specimens, regardless of the size and the concentration. It can be seen that the seal-sealing PE specimens with higher concentration of smaller SAP particles have better sealability.

**Figure 7** shows the sealability of the self-sealing PE specimen containing 10wt% small SAP particles to the defect in the form of crack.

**Figure 7a-c** respectively shows the crack in the specimen before the water penetration test, after the water penetration test, and after the drying process at 60°C under vacuum for about 12h. It can be seen that the crack has nothing inside before the test, and is completely blocked after the test, and that the crack has some SAP residues inside after the drying process.

## Claims

1. An extruded article consisting of a polyolefin composition (C), comprising
i) 85.0 to 99.0 wt.-% of a polyolefin (PO), and
ii) 1.0 to 15.0 wt.-% of a super absorbent polymer (SAP),
based on the overall weight of the polyolefin composition (C),
wherein the sum of the polyolefin (PO) and the super absorbent polymer (SAP) is from 95.0 to 100 wt% based on the overall weight of the polyolefin composition (C).

2. The extruded article according to claim 1, wherein the polyolefin (PO) is a homopolymer of ethylene or of a C₃-C₈-α-olefin, or is a copolymer of at least two different monomers, wherein each of these different monomers is selected from the group consisting of ethylene and a C₃-C₈-α-olefin, and wherein the copolymer consists of monomer units which are derived from these monomers.

3. The extruded article according to claim 1 or 2, wherein the polyolefin (PO) is a homopolymer or a copolymer of ethylene or of a C₃-C₈-α-olefin, wherein the comonomer content is from 0 to 10 wt%.

4. The extruded article according to any one of claims 1 to 3, wherein the polyolefin (PO) is an ethylene homo- or copolymer (PE).

5. The extruded article (C) according to claim 4, wherein the ethylene homo- or copolymer (PE) has a melt flow rate MFR₂ at 190 °C and a load of 2.16 kg determined according to ISO 1133 in the range of 0.01 to 10.0 g/10 min.

6. The extruded article according to any one of claims 1 to 5, wherein the super absorbent polymer (SAP) is selected from the group consisting of polyacrylic acid, polyacrylates, polyacrylamide, polyvinylpyrrolidone, amylopectine, gelantine, cellulose, carboxymethyl starch, carboxymethyl cellulose, hydroxypropyl cellulose, polyvinyl alcohol, polyvinyl ether, polyvinyl pyridine, polyvinyl morpholinione, N,N-dimethylaminoethyl (meth)acrylate, N,N-dimethylaminopropyl (meth)acrylate or mixtures thereof.

7. The extruded article according to any one of claims 1 to 6, wherein the super absorbent polymer (SAP) is sodium polyacrylate.

8. The extruded article according to any one of claims 1 to 7, wherein the polyolefin composition (C) consists of
i) 85.0 to 99.0 wt.-% of a polyolefin (PO),
ii) 1.0 to 15.0 wt.-% of a super absorbent polymer (SAP), and
iii) 0.0 to 5.0 wt.-% of additives (AD),
based on the overall weight of the polyolefin composition (C).

9. The extruded article according to any one of claims 1 to 8, wherein the extruded article is a film or a pipe.

10. A coated article comprising a substrate and a coating, wherein the coating is coated onto at least a part of the surface of the substrate by extrusion, wherein the coating consists of an extruded article according to any one of claims 1 to 8.

11. The coated article according to claim 10, wherein the substrate is a pipe or a cable.

12. A pipe comprising a coating layer consisting of the extruded article according to any one of claims 1 to 8.

13. A cable comprising a coating layer consisting of the extruded article according to any one of claims 1 to 8.

## Patentansprüche

1. Ein extrudierter Gegenstand, bestehend aus einer Polyolefin-Zusammensetzung (C), umfassend
i) 85,0 bis 99,0 Gew.-% eines Polyolefins (PO), und
ii) 1,0 bis 15,0 Gew.-% eines superabsorbierenden Polymers (SAP),
bezogen auf das Gesamtgewicht der Polyolefin-Zusammensetzung (C),
wobei die Summe des Polyolefins (PO) und des superabsorbierenden Polymers (SAP) 95,0 bis 100 Gew.-%, bezogen auf das Gesamtgewicht der Polyolefin-Zusammensetzung (C), ausmacht.

2. Der extrudierte Gegenstand nach Anspruch 1, wobei das Polyolefin (PO) ein Homopolymer aus Ethylen oder einem C₃-₈-α-Olefin ist, oder ein Copolymer aus mindestens zwei verschiedenen Monomeren ist, wobei jedes dieser verschiedenen Monomere ausgewählt ist aus der Gruppe bestehend aus Ethylen und einem C₃-C₈-α-Olefin, und wobei das Copolymer aus Monomer-Einheiten besteht, die von diesen Monomeren abgeleitet sind.

3. Der extrudierte Gegenstand nach Anspruch 1 oder 2, wobei das Polyolefin (PO) ein Homopolymer oder ein Copolymer von Ethylen oder einem C₍₃)-C₈-α-Olefin ist, wobei der Comonomergehalt 0 bis 10 Gew.-% beträgt.

4. Der extrudierte Gegenstand nach einem der Ansprüche 1 bis 3, wobei das Polyolefin (PO) ein Homo- oder Copolymer von Ethylen (PE) ist.

5. Der extrudierte Gegenstand (C) nach Anspruch 4, wobei das Homo- oder Copolymer von Ethylen (PE) eine Schmelzflussrate MFR₂ bei 190 °C und einer Last von 2,16 kg, bestimmt nach ISO 1133, im Bereich von 0,01 bis 10,0 g/10 min aufweist.

6. Der extrudierte Gegenstand nach einem der Ansprüche 1 bis 5, wobei das superabsorbierende Polymer (SAP) ausgewählt ist aus der Gruppe bestehend aus Polyacrylsäure, Polyacrylaten, Polyacrylamid, Polyvinylpyrrolidon, Amylopektin, Gelantine, Cellulose, Carboxymethylstärke, Carboxymethylcellulose, Hydroxypropylcellulose, Polyvinylalkohol, Polyvinylether, Polyvinylpyridin, Polyvinylmorpholinion, N,N-Dimethylaminoethyl(meth)acrylat, N,N-Dimethylaminopropyl(meth)acrylat oder Mischungen davon.

7. Der extrudierte Gegenstand nach einem der Ansprüche 1 bis 6, wobei das superabsorbierende Polymer (SAP) Natriumpolyacrylat ist.

8. Der extrudierte Gegenstand nach einem der Ansprüche 1 bis 7, wobei die Polyolefin-Zusammensetzung (C) aus
i) 85,0 bis 99,0 Gew.-% eines Polyolefins (PO),
ii) 1,0 bis 15,0 Gew.-% eines superabsorbierenden Polymers (SAP), und
iii) 0,0 bis 5,0 Gew.-% an Zusatzstoffen (AD),
bezogen auf das Gesamtgewicht der Polyolefin-Zusammensetzung (C), besteht.

9. Der extrudierte Gegenstand nach einem der Ansprüche 1 bis 8, wobei der extrudierte Gegenstand eine Folie oder ein Rohr ist.

10. Ein beschichteter Gegenstand, umfassend ein Substrat und eine Beschichtung, wobei die Beschichtung auf mindestens einen Teil der Oberfläche des Substrats durch Extrusion aufgetragen wird, wobei die Beschichtung aus einem extrudierten Gegenstand nach einem der Ansprüche 1 bis 8 besteht.

11. Der beschichtete Gegenstand nach Anspruch 10, wobei das Substrat ein Rohr oder ein Kabel ist.

12. Ein Rohr mit einer umhüllenden Schicht, die aus dem extrudierten Gegenstand nach einem der Ansprüche 1 bis 8 besteht.

13. Ein Kabel mit einer umhüllenden Schicht, die aus dem extrudierten Gegenstand nach einem der Ansprüche 1 bis 8 besteht.

## Revendications

1. Article extrudé consistant en une composition de polyoléfine (C), comprenant
i) 85,0 à 99,0 % en poids d'une polyoléfine (PO), et
ii) 1,0 à 15,0 % en poids d'un polymère super absorbant (SAP),
sur la base du poids total de la composition de polyoléfine (C),
dans lequel la somme de la polyoléfine (PO) et du polymère super absorbant (SAP) est de 95,0 à 100 % en poids sur la base du poids total de la composition de polyoléfine (C).

2. Article extrudé selon la revendication 1, dans lequel la polyoléfine (PO) est un homopolymère d'éthylène ou d'une C₃-C₈-α-oléfine, ou est un copolymère d'au moins deux monomères différents, dans lequel chacun de ces monomères différents est sélectionné dans le groupe consistant en éthylène et une C₃-C₈-α-oléfine, et dans lequel le copolymère consiste en des unités monomères qui sont dérivées de ces monomères.

3. Article extrudé selon la revendication 1 ou 2, dans lequel la polyoléfine (PO) est un homopolymère ou un copolymère d'éthylène ou d'une C₃-C₈-α-oléfine, dans lequel la teneur en comonomère est de 0 à 10 % en poids.

4. Article extrudé selon l'une des revendications 1 à 3, dans lequel la polyoléfine (PO) est un homo ou copolymère d'éthylène (PE).

5. Article extrudé (C) selon la revendication 4, dans lequel l'homo ou copolymère d'éthylène (PE) a un indice de fluidité à chaud MFR₂ à 190 °C et une charge de 2,16 kg déterminée selon ISO 1133 dans la plage de 0,01 à 10,0 g/10 min.

6. Article extrudé selon l'une des revendications 1 à 5, dans lequel le polymère super absorbant (SAP) est sélectionné dans le groupe consistant en acide polyacrylique, polyacrylates, polyacrylamide, polyvinylpyrrolidone, amylopectine, gélantine, cellulose, carboxyméthylamidon, carboxyméthylcellulose, hydroxypropyl cellulose, alcool polyvinylique, polyvinyl éther, polyvinyl pyridine, polyvinyl morpholinione, N,N-diméthylaminoéthyl (méth)acrylate, N,N-diméthylaminopropyl (méth)acrylate ou des mélanges de ceux-ci.

7. Article extrudé selon l'une des revendications 1 à 6, dans lequel le polymère super absorbant (SAP) est du polyacrylate de sodium.

8. Article extrudé selon l'une des revendications 1 à 7, dans lequel la composition de polyoléfine (C) consiste en
i) 85,0 à 99,0 % en poids d'une polyoléfine (PO),
ii) 1,0 à 15,0 % en poids d'un polymère super absorbant (SAP), et
iii) 0,0 à 5,0 % en poids d'additifs (AD),
sur la base du poids total de la composition de polyoléfine (C).

9. Article extrudé selon l'une des revendications 1 à 8, dans lequel l'article extrudé est un film ou un tuyau.

10. Article revêtu comprenant un substrat et un revêtement, dans lequel le revêtement revêt au moins une partie de la surface du substrat par extrusion, dans lequel le revêtement consiste en un article extrudé selon l'une des revendications 1 à 8.

11. Article revêtu selon la revendication 10, dans lequel le substrat est un tuyau ou un câble.

12. Tuyau comprenant une couche de revêtement consistant en l'article extrudé selon l'une des revendications 1 à 8.

13. Câble comprenant une couche de revêtement consistant en l'article extrudé selon l'une des revendications 1 à 8.
